# EUROPEAN PATENT APPLICATION

(11) **EP 4 822 792 A1**
(43) Date of publication of application: **14.10.2026**
(21) Application number: 25848899.8
(22) Date of filing: 29.07.2025
(51) Int. Cl.: H01M 10/04, H01M 50/103

(54) **PRISMATIC SECONDARY BATTERY INCLUDING PLURALITY OF ELECTRODE ASSEMBLIES**

(30) Priority: 01.08.2024 KR 20240102376
(71) Applicant: LG Energy Solution, Ltd., Seoul 07335 (KR)
(72) Inventor: HA, Jung Hoon, Daejeon 34122 (KR)
(74) Representative: Goddar, Heinz J.
(86) International application number: PCT/KR2025/011260
(87) International publication number: WO 2026/029539

(57) **Abstract**

The disclosed invention relates to a prismatic secondary battery accommodating an electrode assembly and an electrolyte within a metal case having a hexahedral shape. The electrode assembly is characterized by comprising a plurality of unit electrode assemblies stacked in the thickness direction.

## Description

### [Technical Field]

The present disclosure relates to a prismatic secondary battery, and more particularly, to a prismatic secondary battery in which individually completed electrode assemblies capable of constituting independent secondary batteries are accommodated in one prismatic case.

This application claims the benefit of priority from Korean Patent Application No. 10-2024-0102376, filed on August 01, 2024, the entire contents disclosed therein are incorporated by reference into this disclosure.

### [Background]

Secondary batteries, unlike primary batteries, are rechargeable and have been extensively researched and developed in recent years due to their potential for miniaturization and high capacity. With the increasing technological development and demand for mobile devices, and due to electric vehicles and energy storage systems emerging in response to environmental protection demands, the demand for secondary batteries as energy sources is increasing even more rapidly.

Secondary batteries are classified into coin-type batteries, cylindrical batteries, prismatic batteries, and pouch-type batteries according to the shape of a battery case. In a secondary battery, an electrode assembly mounted inside the battery case is a power generation element capable of charge and discharge, comprising a stacked structure of electrodes and separators.

A pouch-type battery uses a pouch made of flexible laminate material as a battery case, and after placing an electrode assembly and electrolyte inside the pouch, open edges are heat-sealed for sealing. However, pouch-type batteries have limitations in manufacturing high energy density batteries due to a maximum thickness limitation caused by the durability limit of the pouch material, and changing the form of pouch-type batteries in mass production required mold replacement in electrode manufacturing and assembly processes. In addition, pouch-type batteries have a disadvantage of somewhat vulnerable cell safety due to gas generation during long-term use.

### [Summary]

### [Technical Problem]

The present disclosure has an object to enable manufacturing of a prismatic battery with a metal case by utilizing electrode assemblies already produced for manufacturing existing pouch-type batteries.

However, the technical problem to be solved by the present disclosure is not limited to the above-described problem, and other problems not mentioned can be clearly understood by a person skilled in the art from the description of the disclosure described below.

### [Technical Solution]

The present disclosure relates to a prismatic secondary battery in which an electrode assembly and electrolyte are accommodated in a hexahedral metal case, wherein the electrode assembly is characterized by a plurality of unit electrode assemblies stacked in a thickness direction.

Each unit electrode assembly of the plurality of unit electrode assemblies is independently manufactured to form a completed state as a power generation element.

For example, each unit electrode assembly may be finished by taping or wrapping.

In addition, in the electrode assembly, the stacked plurality of unit electrode assemblies is wrapped with a separator to form an integral body.

The unit electrode assembly may be at least one stack-type cell among S&F (Stack & Folding), L&S (Laminate & Stacking), and AZS (Advanced Zigzag Stacking) types.

In one embodiment of the present disclosure, the electrode assembly may use a combination of a unidirectional unit electrode assembly and a bidirectional unit electrode assembly having different electrode tab arrangements.

In addition, each electrode tab of the unidirectional unit electrode assembly and the bidirectional unit electrode assembly may be mechanically and electrically connected to each electrode terminal provided in the prismatic secondary battery through one current collector.

Alternatively, the electrode assembly may use a combination of unit electrode assemblies having different characteristics in at least one of swelling amount, charge and discharge rate, charge and discharge capacity, capacity retention rate, and energy density.

For example, the electrode assembly may be arranged such that a unit electrode assembly having a large swelling amount is placed on an inner side, and a unit electrode assembly having a relatively small swelling amount surrounds the outside thereof.

Alternatively, the electrode assembly may be arranged such that a unit electrode assembly having a fast charge and discharge rate is placed on an inner side, and a unit electrode assembly having a relatively slow charge and discharge rate surrounds the outside thereof.

### [Advantageous Effects]

As described above, the prismatic secondary battery of the present disclosure is configured as a new prismatic secondary battery by bundling a plurality of unit electrode assemblies that have already been completely manufactured for producing pouch-type batteries. Accordingly, prismatic secondary batteries can be efficiently produced without modification to existing production lines for pouch-type batteries, and production costs can be reduced by utilizing already manufactured electrode assemblies as they are.

In addition, it is possible to use a combination of unit electrode assemblies having different specifications in electrode tab arrangement, and furthermore, performance of the prismatic secondary battery can be improved by using a combination of unit electrode assemblies having different swelling characteristics or charge and discharge characteristics, thereby compensating for disadvantages when applying an electrode assembly of one specification conventionally. In particular, such performance improvement is achieved without accompanying development of an electrode assembly of a new specification, and thus highly efficient in terms of development costs.

However, the technical effects that can be obtained through the present disclosure are not limited to the above-described effects, and other effects not mentioned can be clearly understood by a person skilled in the art from the description of the disclosure described below.

### [Brief Description of the Drawings]

Because the following drawings attached to the present specification illustrate exemplary embodiments of the present disclosure and serve to facilitate understanding of the technical idea of the present disclosure together with the detailed description of the disclosure described below, the present disclosure should not be limitedly interpreted on the basis of the drawings.
FIG. 1 is a view illustrating one embodiment of an electrode assembly accommodated in a prismatic secondary battery of the present disclosure.
FIG. 2 is a view exemplarily illustrating a configuration in which a plurality of unit electrode assemblies is stacked into one electrode assembly.
FIG. 3 is a view exemplarily illustrating a configuration in which unit electrode assemblies having different specifications in electrode tab arrangement are used in combination and stacked into one electrode assembly.
FIG. 4 is a view illustrating an example of configuring a prismatic secondary battery with the electrode assembly of FIG. 3.
FIG. 5 is a view exemplarily illustrating a configuration in which unit electrode assemblies having different charge and discharge characteristics are used in combination and stacked into one electrode assembly.

### [Best Mode]

The present disclosure may have various modifications and various embodiments, and thus specific embodiments thereof will be described in detail below.

However, it should be understood that the present disclosure is not limited to the specific embodiments, and includes all modifications, equivalents, or alternatives within the spirit and technical scope of the present disclosure.

The terms "comprise," "include," and "have" used herein designate the presence of characteristics, numbers, steps, actions, components, or members described in the specification or a combination thereof, and it should be understood that the possibility of the presence or addition of one or more other characteristics, numbers, steps, actions, components, members, or a combination thereof is not excluded in advance.

In addition, in the present disclosure, when a part of a layer, film, region, plate, or the like is disposed "on" another part, this includes not only a case in which one part is disposed "directly on" another part, but a case in which still another part is interposed therebetween. In contrast, when a part of a layer, film, region, plate, or the like is disposed "under" another part, this includes not only a case in which one part is disposed "directly under" another part, but a case in which still another part is interposed therebetween. In addition, in the present application, "on" may include not only a case of being disposed on an upper portion but also a case of being disposed on a lower portion.

The present disclosure relates to a prismatic secondary battery in which an electrode assembly and electrolyte are accommodated in a hexahedral metal case, wherein the electrode assembly is characterized by a plurality of unit electrode assemblies stacked in a thickness direction, and each unit electrode assembly of the plurality of unit electrode assemblies is independently manufactured to form a completed state as a power generation element.

As described above, the prismatic secondary battery of the present disclosure is configured as a new prismatic secondary battery by bundling a plurality of unit electrode assemblies that have already been completely manufactured for producing pouch-type batteries.

Accordingly, prismatic secondary batteries can be efficiently produced without modification to existing production lines for pouch-type batteries, and production costs can be reduced by utilizing already manufactured electrode assemblies as they are.

### [Detailed Description]

Hereinafter, specific embodiments of a prismatic secondary battery 300 according to the present disclosure will be described in detail with reference to the accompanying drawings. For reference, the directions of front, back, up, down, left, and right used in the following description to designate relative positions are for the purpose of understanding the disclosure and refer to the directions shown in the drawings unless otherwise specified.

### [first embodiment]

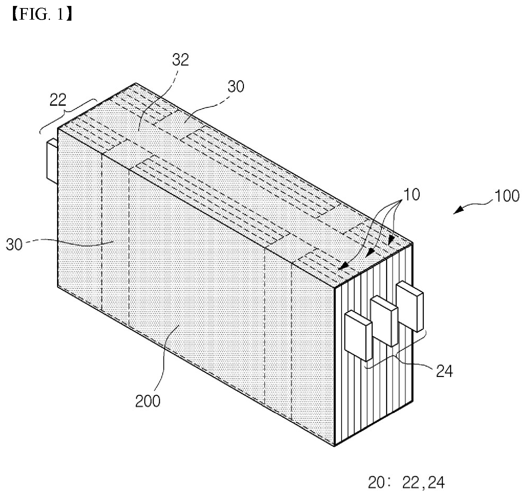

FIG. 1 is a view illustrating one embodiment of an electrode assembly 100 accommodated in a prismatic secondary battery 300 of the present disclosure. The prismatic secondary battery 300 refers to a secondary battery in a form in which an electrode assembly 100 and electrolyte 340 are accommodated in a hexahedral metal case 310 (mostly in a rectangular parallelepiped shape). Typically, one electrode assembly having a structure in which a positive electrode and a negative electrode, and a separator disposed therebetween are mutually stacked is accommodated in the prismatic secondary battery 300. For example, one jelly-roll electrode assembly having a size suitable for fitting into an accommodation space of a prismatic case can be accommodated.

Unlike such conventional prismatic secondary batteries, in the present disclosure, a plurality of unit electrode assemblies 10 are stacked in a thickness direction to constitute one electrode assembly 100. Each unit electrode assembly 10 of the plurality of unit electrode assemblies 10 is independently manufactured to form a completed state as a power generation element. For example, each unit electrode assembly 10 may be finished by taping 30 or wrapping 32, whereby each unit electrode assembly 10 can be distinguished from each other in appearance and physically.

Here, the meaning that each unit electrode assembly 10 is independently manufactured to form a completed state as a power generation element is consistent with the fact that when the electrode assembly 100 is disassembled and divided into a plurality of unit electrode assemblies 10, individual prismatic secondary batteries can be made with the separated individual unit electrode assemblies 10. The electrode assembly 100 mounted in the prismatic secondary battery 300 of the present disclosure can be used to manufacture a new prismatic secondary battery 300 with high energy density by bundling a plurality of unit electrode assemblies 10 with low energy density that have already been produced or are in mass production. Furthermore, the unit electrode assemblies 10 with low energy density that have already been produced or are in mass production may be those produced for manufacturing secondary batteries of specifications other than the prismatic secondary battery 300, for example, pouch-type batteries.

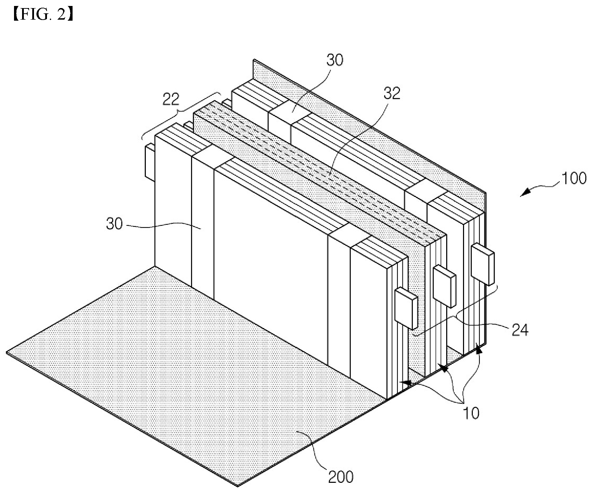

FIG. 2 is a view exemplarily illustrating a configuration in which a plurality of unit electrode assemblies 10 are stacked into one electrode assembly 100. Referring to FIG. 2, each unit electrode assembly 10 is finished by taping 30 or wrapping 32, and the plurality of unit electrode assemblies 10 are stacked along the thickness direction of the prismatic secondary battery 300, and all the stacked unit electrode assemblies 10 are wrapped together with a separator 200 to form one integral electrode assembly 100.

The unit electrode assembly 10 may be a stack-type cell. For example, it may be at least one stack-type cell among S&F (Stack & Folding), L&S (Laminate & Stacking), and AZS (Advanced Zigzag Stacking) types. These various types of stack-type cells can form one electrode assembly 100 as one type or a combination of two or more types of stack-type cells. Here, since the general structure and manufacturing method for each stack-type cell of S&F, L&S, and AZS types are known technologies, detailed description thereof will be omitted in this specification.

### [second embodiment]

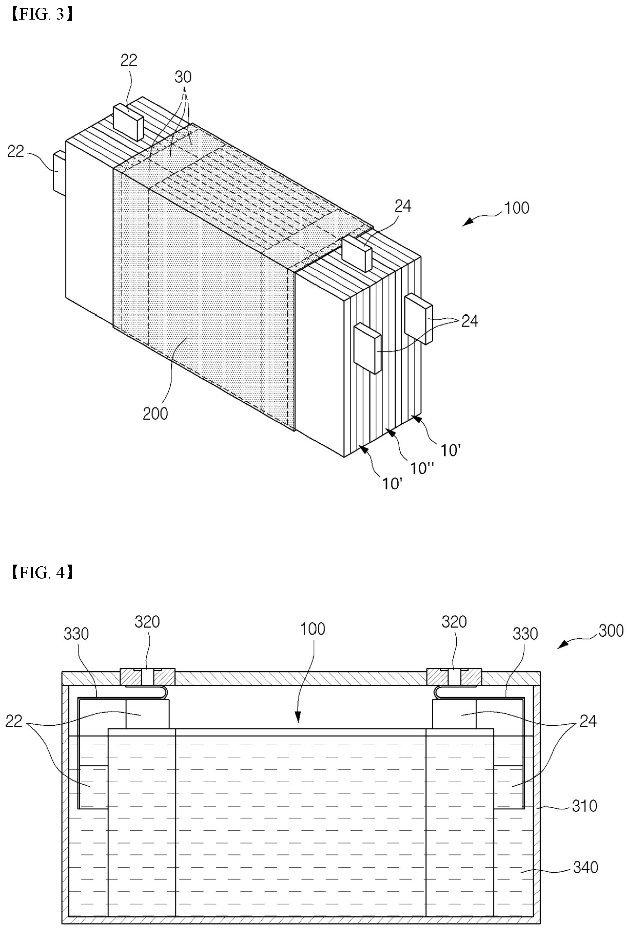

FIG. 3 is a view exemplarily illustrating a configuration in which unit electrode assemblies 10 having different specifications in electrode tab 20 arrangement are used in combination and stacked into one electrode assembly 100. FIG. 3 can be understood as an exemplary electrode assembly for showing that the prismatic secondary battery 300 of the present disclosure can be manufactured by combining unit electrode assemblies 10 of various specifications.

Referring to FIG. 3, the electrode assembly 100 uses a combination of a unidirectional unit electrode assembly 10" and a bidirectional unit electrode assembly 10' having different electrode tab 20 arrangements. Here, the unidirectional unit electrode assembly 10" refers to a structure in which a positive electrode tab 22 and a negative electrode tab 24 are disposed together on one surface of the unit electrode assembly 10. On the other hand, the bidirectional unit electrode assembly 10' refers to a structure in which the positive electrode tab 22 and the negative electrode tab 24 are separately disposed on both opposing surfaces of the unit electrode assembly 10. In FIG. 3, the unidirectional unit electrode assembly 10" has the positive electrode tab 22 and the negative electrode tab 24 protruding toward the upper side (based on the drawing), and the bidirectional unit electrode assembly 10' has the positive electrode tab 22 and the negative electrode tab 24 protruding in the left and right directions (based on the drawing).

FIG. 4 is a view illustrating an example of configuring a prismatic secondary battery 300 with the electrode assembly 100 of FIG. 3. In the electrode assembly 100 of FIG. 3, the positive electrode tab 22 and the negative electrode tab 24 of the unidirectional unit electrode assembly 10" are spaced apart on the upper surface, and the positive electrode tab 22 and the negative electrode tab 24 of the bidirectional unit electrode assembly 10' are disposed on both side surfaces.

For structural simplification, each electrode tab 22, 24 of the unidirectional unit electrode assembly 10" and the bidirectional unit electrode assembly 10' is mechanically and electrically connected to each electrode terminal 320 provided in the prismatic secondary battery 300 through one current collector 330. For this purpose, the positive electrode tab 22 of the unidirectional unit electrode assembly 10" is disposed in a direction close to the positive electrode tab 22 of the bidirectional unit electrode assembly 10', and the same applies to the negative electrode tab 24 of each unit electrode assembly 10', 10".

In addition, FIG. 1 and FIG. 2 exemplarily show a case where a plurality of bidirectional unit electrode assemblies are applied as unit electrode assemblies 10 having the same electrode tab 20 arrangement specification, and although not illustrated in the drawings, it will be obviously understood that it is also possible to configure the electrode assembly 100 by stacking a plurality of unidirectional unit electrode assemblies.

### [third embodiment]

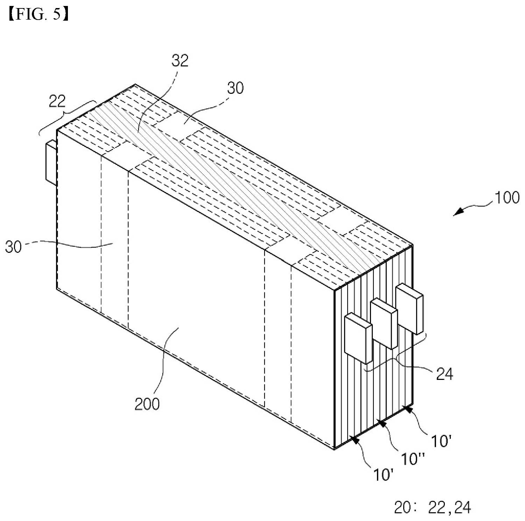

FIG. 5 is a view exemplarily illustrating a configuration in which unit electrode assemblies 10', 10" having different charge and discharge characteristics are used in combination and stacked into one electrode assembly 100.

Each unit electrode assembly 10', 10" has differences in behavior and main performance indicators in charge and discharge characteristics depending on the main components (series) of the positive electrode material and the negative electrode material.

For example, there may be differences in the swelling amount by which the unit electrode assembly expands due to charge and discharge. To give a specific example, when a silicon-based negative electrode material is used as the negative electrode material, it is advantageous for rapid charge and discharge, but the swelling amount may increase depending on the silicon content.

Alternatively, the capacity retention rate, which measures the reduction rate of discharge capacity compared to the initial state after multiple charge and discharge cycles (for example, 200 charge and discharge cycles), may also differ for each unit electrode assembly. For example, the NCM 622 series, which is a positive electrode material, is stable and has excellent capacity retention rate, but is an expensive positive electrode material.

Charge and discharge characteristics can also be evaluated by charge and discharge capacity, energy density, etc., in addition to swelling amount, charge and discharge rate, and capacity retention rate, and these various charge and discharge characteristics exhibit various aspects depending on the series of positive electrode material and negative electrode material used in the unit electrode assembly. By using a combination of unit electrode assemblies having these various charge and discharge characteristics, it can also be said to be an advantage of the present disclosure that a new electrode assembly close to the target characteristics can be created without developing new positive electrode materials and negative electrode materials. For example, development of a new positive electrode material combining LMFP and NCM is being attempted, but various problems may occur in electrode production when combining positive electrode materials of different series. Therefore, instead of combining positive electrode materials of different series themselves, making one electrode assembly by using a combination of already verified unit electrode assemblies including each positive electrode material can be a solution to such problems.

In addition, even when stacking unit electrode assemblies 10', 10" having different charge and discharge characteristics into one electrode assembly 100, it may be desirable to optimize the stacking order or structure. For example, a unit electrode assembly 10" having a large swelling amount can be placed on the inner side, and a unit electrode assembly 10' having a relatively small swelling amount can be stacked in a sandwich structure of the electrode assembly 100 surrounding the outside thereof. By creating a structure in which the unit electrode assembly 10" having a large swelling amount is pressed, the swelling amount of the electrode assembly 100 itself can be appropriately controlled.

Alternatively, the electrode assembly 100 may be manufactured in a structure in which a unit electrode assembly 10" having a fast charge and discharge rate is placed on the inner side, and a unit electrode assembly 10' having a relatively slow charge and discharge rate surrounds the outside thereof. This takes into account that the unit electrode assembly 10" having a fast charge and discharge rate generally has a large swelling amount. In addition, since the unit electrode assembly 10" having a fast charge and discharge rate usually has a greater temperature rise during charge and discharge, by placing the unit electrode assembly 10' that forms a relatively low temperature on the outside, the influence of heat generated in the electrode assembly 100 on the surroundings can be reduced.

As aforementioned, the present disclosure has been described in more detail through the drawings, embodiments, and the like. However, since the configuration described in the drawings or embodiments, etc. described herein is merely one embodiment of the present disclosure and does not represent the overall technical spirit of the disclosure, it should be understood that the disclosure covers various equivalents, modifications, and substitutions at the time of filing of this application.

### [Description of Reference Numerals]

10, 10', 10": unit electrode assembly
20: electrode tab
22: positive electrode tab
24: negative electrode tab
30: taping
32: wrapping
100: electrode assembly
200: separator
300: prismatic secondary battery
310: case
320: electrode terminal
330: current collector
340: electrolyte

## Claims

1. A prismatic secondary battery in which an electrode assembly and electrolyte are accommodated in a hexahedral metal case, wherein the electrode assembly comprises a plurality of unit electrode assemblies stacked in a thickness direction.

2. The prismatic secondary battery of claim 1, wherein each unit electrode assembly of the plurality of unit electrode assemblies is independently manufactured to form a completed state as a power generation element.

3. The prismatic secondary battery of claim 2, wherein each unit electrode assembly is finished by taping or wrapping.

4. The prismatic secondary battery of claim 3, wherein in the electrode assembly, the stacked plurality of unit electrode assemblies is wrapped with a separator to form an integral body.

5. The prismatic secondary battery of any one of claims 1 to 4, wherein the unit electrode assembly is at least one stack-type cell among S&F (Stack & Folding), L&S (Laminate & Stacking), and AZS (Advanced Zigzag Stacking) types.

6. The prismatic secondary battery of any one of claims 1 to 4, wherein the electrode assembly comprises a combination of a unidirectional unit electrode assembly and a bidirectional unit electrode assembly having different electrode tab arrangements.

7. The prismatic secondary battery of claim 6, wherein each electrode tab of the unidirectional unit electrode assembly and the bidirectional unit electrode assembly is mechanically and electrically connected to each electrode terminal provided in the prismatic secondary battery through one current collector.

8. The prismatic secondary battery of any one of claims 1 to 4, wherein the electrode assembly comprises a combination of unit electrode assemblies having different characteristics in at least one of swelling amount, charge and discharge rate, charge and discharge capacity, capacity retention rate, and energy density.

9. The prismatic secondary battery of claim 8, wherein the electrode assembly is arranged such that a unit electrode assembly having a large swelling amount is placed on an inner side, and a unit electrode assembly having a relatively small swelling amount surrounds the outside thereof.

10. The prismatic secondary battery of claim 8, wherein the electrode assembly is arranged such that a unit electrode assembly having a fast charge and discharge rate is placed on an inner side, and a unit electrode assembly having a relatively slow charge and discharge rate surrounds the outside thereof.
